# EUROPEAN PATENT SPECIFICATION

(11) **EP 3 310 229 B1**
(45) Date of publication and mention of the grant of the patent: **01.04.2020**
(21) Application number: 16738498.1
(22) Date of filing: 21.06.2016
(51) Int. Cl.: A47K 3/02, B29C 43/14, B29C 43/20

(54) **COMPOSITE BATH TUB AND METHOD OF MANUFACTURE**
VERBUNDBADEWANNE UND VERFAHREN ZUR HERSTELLUNG
BAIGNOIRE COMPOSITE ET PROCÉDÉ DE FABRICATION

(30) Priority: 21.06.2015 GB 201510901
(43) Date of publication of application: 25.04.2018
(73) Proprietor: Kohler Mira Limited, Gloucestershire GL52 5EP (GB)
(72) Inventor: NICHOLS, John, Cheltenham Gloucestershire GL52 5EP (GB); CRANWELL, Jim, Cheltenham Gloucestershire GL52 5EP (GB); HARRIS, Tim, Cheltenham Gloucestershire GL52 5EP (GB)
(74) Representative: Barker Brettell LLP
(86) International application number: PCT/GB2016/051847
(87) International publication number: WO 2016/207616

(56) References cited:
- EP-A1- 0 563 670
- EP-A2- 0 034 678
- WO-A1-2005/011455
- GB-A- 1 052 773
- NZ-A- 329 586

## Description

The invention relates to composite articles and methods of manufacturing such articles. The invention has particular application to composite articles of sanitary ware, especially bath tubs.

Bath tubs made of cast iron, ceramic or plastic materials. Cast iron bath tubs are strong and rigid, but heavy, requiring several people for lifting and installation. The weight of such bath tubs can make lifting and carrying the bath tubs during installation difficult. Lifting and carrying heavy bath tubs can result in injury to the lifter or/and cause the lifter to drop the bath tub, resulting in damage to the bath tub, and/or to the surroundings.

WO 2005/011455 (A1) discloses Shower trays and like articles in which an outer shell of plastics material encases a core of stone resin material. The outer shell comprises upper and lower members provided with formations that co-operate to locate and align the members. Overlapping regions of the formations are removed after the core is formed to provide a base for the article and a hole for wastewater.

Plastic bath tubs are light-weight, facilitating lifting and installation, but are less rigid than cast iron bath tubs and require support frames to prevent flexing under the weight of the water and/or of a user.

It is an object of the invention to overcome, or at least mitigate, some of the aforementioned disadvantages of known bath tubs.

According to a first aspect of the invention there is provided a composite article according to the features of claim 1, having an upper member of plastics material and a lower member of plastics material that together form an outer shell, and an inner core of filler within the shell. The composite article is a bath tub. The layer of the filler formed between the upper and lower members has a substantially uniform wall thickness. Preferably, the wall thickness is between 4mm and 15mm, and may be substantially 7mm. A resin filler may be used.

Viscosity of the filler should be considered when selecting a suitable filler material. The viscosity is preferably chosen such that the filler material flows between the upper and lower members and does not form voids within the inner core. Resin-stone mixes are commonly used as filler materials, and may be referred to as composite resins. The skilled person would understand that other solid particles can be used in the place of stone. As such filler materials comprise solid particles, lower viscosity can lead to faster sedimentation of the filler material, which may result in a nonuniform distribution of particles within the inner core. According to the invention, the filler materials exhibit a certain degree of non-Newtonian behaviour. In particular, the fillers demonstrate shear-thinning, i.e. a decrease in viscosity with increasing shear. The relatively higher viscosity when the filler material is stationary reduces sedimentation. The relatively lower viscosity when pressure is being applied allows the filler material to flow to take the shape of the inner core, without creating voids.

The upper and lower members may be made of materials that provide a hardwearing, scratch resistant surface to the bath tub. One or both of the upper and lower members may be an acrylic capped acrylonitrile butadiene styrene (ABS) material. The acrylic material forms the hardwearing, scratch resistant surface of the bath tub, and may be coloured or patterned to appeal to customers. In embodiments wherein one or both of the upper and lower members comprise an acrylic capped ABS material, the thickness of the ABS is typically greater than the thickness of the acrylic. In a preferred arrangement, the acrylic may comprise approximately 15% of the overall thickness of the member. It may be that each member has a thickness of 2mm to 5mm, more preferably 3mm to 4 mm. One or both of the upper and lower members may be provided with a coating of a primer material on the surface that comes into contact with the filler material of the inner core to aid adhesion to the filler material.

The upper member provides the inside surface of the bath tub and may additionally provide the upper surface of a lip around the rim of the bath tub. It may be that the upper member has a substantially uniform thickness at least in the region of the side walls of the bath tub. More preferably the upper member has a substantially uniform thickness in the region of the side walls and in the region of the floor. Preferably, the upper member is of uniform or substantially uniform thickness.

The lower member provides the outside surface of the bath tub, and, where provided may additionally provide the lower surface of the lip around the rim of the bath tub. It may be that the lower member has a substantially uniform thickness at least in the region of the side walls of the bath tub. More preferably the lower member has a substantially uniform thickness in the region of the side walls and in the region of the floor or the majority of the side walls and/or floor excluding any localised areas of variable thickness. Preferably, the lower member is of uniform or substantially uniform thickness.

In some embodiments the combined overall thickness of the upper and lower members and the inner core may be in the range 8mm to 25mm, more preferably 10mm to 23mm, yet more preferably 10 to 18mm and still more preferably 13 to 15mm.

In some embodiments, a ratio of the combined thickness of the upper and lower members to the thickness of the inner core may be in the range 1:1.5 to 1.5: 1 and is preferably approximately 1:1.

Preferably, sockets are provided in the underside of the lower member for receiving legs for raising the bath tub above the surface on which it is installed. In this way, the bath tub can be provided with legs for optional use when installing the bath tub according to whether the bath tub is to be mounted directly on the floor or raised from the floor. The legs may be an interference push-fit into the sockets. The sections of the legs located within the sockets may have longitudinally outwardly extending ribs that bite into the wall of the socket when the legs are inserted and assist in centering the legs. In alternative or additional embodiments, the lower member may further comprise strengthening struts or ridges which, in use, are located on the underside of the bath tub.

Preferably, the inner core of filler is a composite material formed from a polymer resin, a catalyser and one or more particulates. Suitable materials include, but are not limited to polymer resins, such as polyester resins, and solid particulates, such as stone, limestone, calcium carbonate and the like. The ratio of particulates to polymer resin may be in the region of 4:1 by weight although this is not limiting and other ratios may be employed.

According to a second aspect of the invention there is provided a method of manufacturing a composite article, according to the features of claim 9, wherein the composite article is a bath tub comprising an upper member of plastics material and a lower member of plastics material that together form an outer shell, and an inner core of filler within the shell.

The method comprises the following steps:
(i) placing a lower member of the bath tub into a first support;
(ii) placing a volume of filler into the lower member;
(iii) placing an upper member of the bath tub into the lower member;
(iv) inserting a second support into the upper member;
(v) providing pressure onto the second support, such that the upper member is pushed toward the lower member, causing the resin to be distributed between the upper and lower members; and
(vi) curing the composite article.

Preferably, the desired distance between the lower and upper members is known, this distance substantially defining the thickness of the inner core.

Preferably, the volume of filler to be used is calculated in advance of step (ii) such that the amount of filler provided is sufficient to form the desired inner core. Advantageously, this reduces wastage and provides a substantially even thickness for the inner core.

The method may further comprise reducing the applied pressure during curing.

The skilled person would understand that, in step (v), the upper member may be moved until it is known to be a set distance from the lower member. Additionally or alternatively, the required pressure to displace the filler sufficiently to obtain the set distance may be calculated and that pressure applied.

Preferably, the inner core of filler is a composite material formed from a polymer resin, a catalyser and one or more particulates. Suitable materials include, but are not limited to polymer resins, such as polyester resins, and solid particulates, such stone, limestone, calcium carbonate and the like. The ratio of particulates to polymer resin may be in the region of 4:1 by weight although this is not limiting and other ratios may be employed.

The filler has a viscosity that allows the filler to spread easily and uniformly between the upper and lower members so as to reduce or eliminate the potential for voiding in the final produce resulting in a stronger final product. The viscosity is in the range 12 to 17 Pa.s. The skilled person would understand that the curing conditions to use depend on the choice of filler material. The method may further comprise pre-forming the upper member and lower member. The upper and lower members may be formed by vacuum moulding.

Advantageously, the first support is shaped to match the lower surface of the lower member, such that the lower member will not substantially deform when pressure is applied.

Advantageously, the second support is shaped to match the upper surface of the upper member, such that the upper member will not substantially deform when pressure is applied.

The first and second supports may be thought of as formers - the upper and lower members may be held between the two formers, and pressure applied to the formers to displace the filler throughout the cavity.

The upper and lower members may be provided with means to aid locating the members relative to one another. The locating means may comprise co-operating formations on the upper and lower members which co-operate with each other when the upper and lower members are fitted together. The co-operating formations may assist locating and aligning the upper and lower members. The co-operating formations may be removed after forming the inner core, for example by cutting with a band saw. In some embodiments, the co-operating formations may comprise cup regions that may provide a waste/plug hole for the bath tub. In other embodiments, the co-operating formations may comprise peripheral edge regions of the upper and lower members.

Alternatively, the first and second supports may comprise slidably interlocking members, such as two cylindrical tubes of matched diameters. The slidably interlocking members may serve to align the upper and lower members and to provide a plug hole in the finished article.

Preferably, the filler is compressed between the upper and lower members prior to hardening to displace the filler throughout the cavity defined between the upper and lower members.

The skilled person would understand that, in embodiments wherein the lower member comprises sockets and/or strengthening ridges, the thickness of the lower member and/or of the inner core may vary in the regions of the sockets and/or strengthening ridges and/or plug hole.

Nonetheless, the inner core may still be considered to be of substantially uniform thickness, when the bath tub is considered as a whole.

Embodiments of the invention will now be described, by example only, with reference to the following drawings, in which like reference numerals are used to indicate the same or similar parts and wherein:-
**Figure 1a** shows a view of a bath tub of an embodiment;
**Figure 1b** shows the upper member of the bath tub shown in Figure 1a, the upper member forming the upper surface of the bath tub;
**Figure 1c** shows the lower member of the bath tub shown in Figure 1a, the lower member forming the lower surface of the bath tub;
**Figure 2a** shows a view of a bath tub of a second embodiment, wherein the positions of the plug hole and overflow hole are different from that shown in the embodiment of Figure 1a to c;
**Figure 2b** is a plan view of the lower member of the bath tub of Figure 2a;
**Figure 2c** is a cross-section of the bath tub of Figures 2a, along line A-A;
**Figure 2d** is a cross-section of the bath tub of Figures 2a, along line B-B;
**Figure 3** is a cross-section of the plug hole labelled D in Figure 2a;
**Figure 4** is a graph of viscosity against shear rate for three samples of resin filler;
**Figure 5** is a schematic illustration of the stages of the manufacturing process of an embodiment; and
**Figure 6** schematically illustrates the four points on a bath tub of an embodiment at which dial test indicator gauges were applied for lifetime testing.

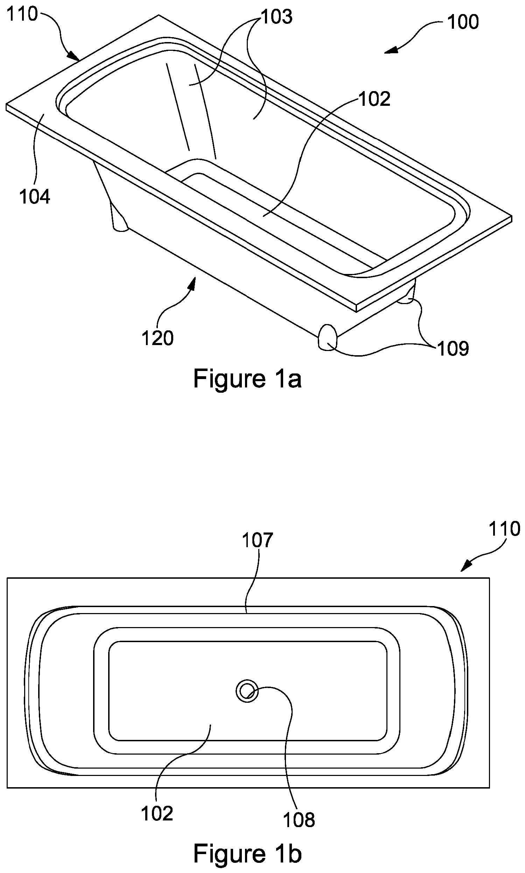

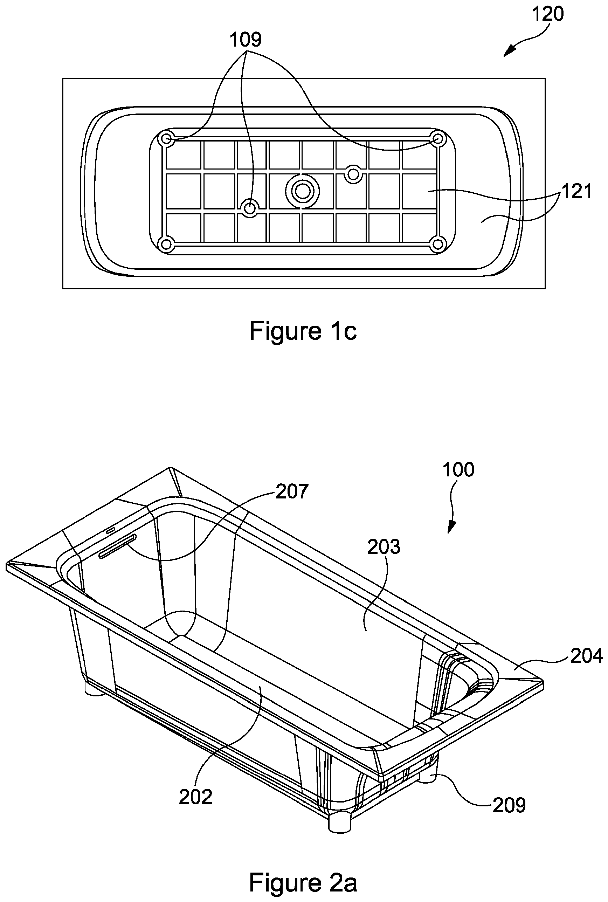

Referring to Figures 1a, 1b and 1c of the accompanying drawings, a bath tub 100 embodying the invention is shown comprising an upper member 110, a lower member 120 and an inner core (not shown). The upper member 110 and lower member 120 form an outer shell defining a cavity that is filled by the inner core.

The upper member 110 is pre-formed to the required internal shape of the interior of the bath tub 100 and the lower member 120 is pre-formed to the required external shape of the exterior of the bath tub 100. The shape of the lower member 120 is configured to co-operate with the upper member 110 such that the upper member fits within the lower member, with the inner core sandwiched between them.

The bath tub 100 has a floor 102 and side walls 103 defining a reservoir for collecting water dispensed from a tap and confining the collected water to the bath tub. A lip 104 is preferably provided around the upper edge of the side walls 103 of the bath tub.

The inner surface of the side walls 103, upper surface of the floor 102 together with the upper surface of the lip 104 are provided by the upper member 110. The outer surface of the side walls 105, lower surface of the floor (not shown) together with the lower surface of the lip 104 are provided by the lower member 120.

Preferably the upper and lower members 110, 120 have a substantially uniform thickness in the region of the side walls 103 and in the region of the floor 102. Preferably, the upper and lower members are of uniform or substantially uniform thickness.

The inner core between the upper and lower members 110, 120 has a substantially uniform thickness at least in the region of the side walls 103 of the bath tub. More preferably the core has a substantially uniform thickness in the region of the side walls 103 and in the region of the floor 102 or the majority of the side walls 103 and/or floor 102.

A water overflow hole 107 is provided in one of the side walls 103 of the bath tub 100. The skilled person would understand that the overflow hole 107 may be provided in differing locations from that shown. In alternative embodiments, the water overflow hole 107 may be omitted.

A plug or drain hole 108 is provided in the floor of the bath tub 100. The skilled person would understand that the drain hole 108 may be provided in differing locations from that shown.

Waste pipes (not shown) may be connected to the drain hole 108 and, where provided, the water overflow hole 107. Alternatively, where provided, the overflow hole 107 may be in communication with the drain hole 108.

The lower member 120 preferably comprises, on the underside, a plurality of support members 109. The support members 109 may sit directly on a support surface, e.g. floor, when installing the bath tub 100. In this embodiment, six support members 109 are provided, one at each corner and two more centrally. It will be understood, however, that the number and arrangement of support members 109 may be altered according to the size and shape of the bath tub.

The support members 109 may comprise sockets for receiving legs or feet (not shown). The legs may be adjustable to change the height of the support members 109 to facilitate installation of the bath tub 100 on uneven floors and/or to allow positioning of the bath tub 100 at a desired height.

The lower member 120 may comprise ribs 121 on the underside. The ribs 121 may strengthen the floor of the bath tub 100 when the bath tub 100 is installed without the use of feet or legs 106. The ribs 121 may extend lengthwise and/or transverse to the length of the bath tub 100. The ribs 121 may also provide recessed regions in the lower member 120 which may facilitate distribution of the filler material that forms the core during manufacture.

The floor 102 of the bath tub 100 may slope towards the plug hole 108 to facilitate drainage of water from the bath tub 100. The height of the ribs 121 may vary to match the slope of the floor 102 of the bath 100. In this way the ribs 121 may sit on the support surface when the bath is installed without legs or feet.

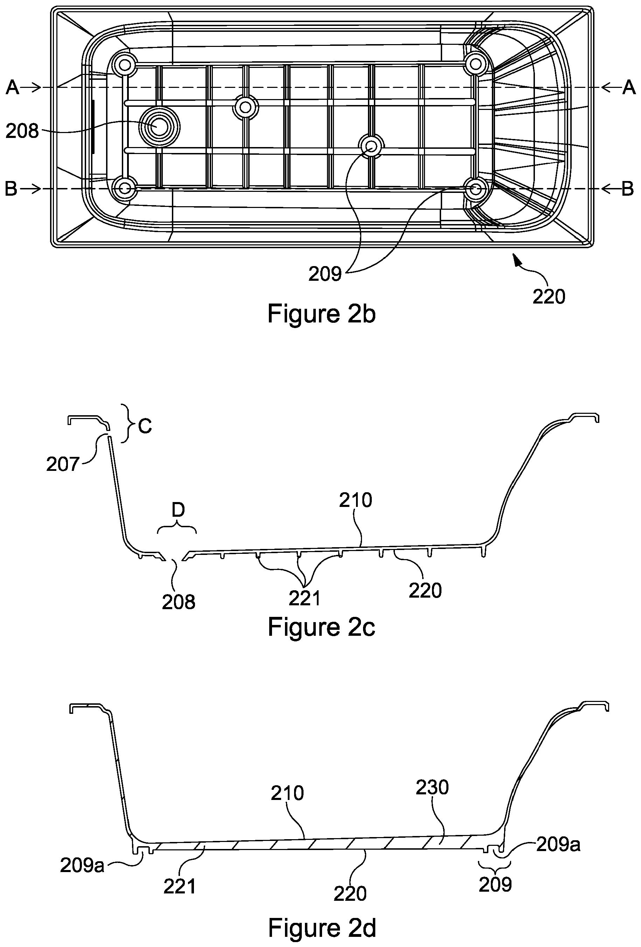

Referring now to Figures 2a, 2b, 2c, 2d of the accompanying drawings a bath tub 200 according to another embodiment is shown in which like reference numerals in the series 200 are used to indicate the same or similar parts to the previous embodiment.

The bath tub 200 comprises an upper member 210, a lower member 220 and an inner core 230 sandwiched between the upper and lower members 210, 220. The upper and lower members 210, 220 form a shell encasing the inner core 230. In this embodiment the overflow hole 207 and plug or drain hole 208 are located in different positions to the previous embodiment.

The upper member 210 is pre-formed to the required internal shape of the interior of the bath tub 200 and the lower member 220 is pre-formed to the required external shape of the exterior of the bath tub 200. The shape of the lower member 220 is configured to co-operate with the upper member 210 such that the upper member fits within the lower member, with the inner core 230 sandwiched between them.

Preferably the upper and lower members 210, 220 have a substantially uniform thickness in the region of the side walls 203 and in the region of the floor 202. Preferably, the upper and lower members are of uniform or substantially uniform thickness.

The bath tub 200 has a floor 202 and side walls 203 defining a reservoir for collecting water dispensed from a tap and confining the collected water to the bath tub. A lip 204 is preferably provided around the upper edge of the side walls 203 of the bath tub.

The inner surface of the side walls 203, upper surface of the floor 202 together with the upper surface of the lip 204 are provided by the upper member 210. The outer surface of the side walls 203, lower surface of the floor (not shown) together with the lower surface of the lip 204 are provided by the lower member 220.

The inner core between the upper and lower members 210, 220 has a substantially uniform thickness at least in the region of the side walls 203 of the bath tub. More preferably the core has a substantially uniform thickness in the region of the side walls 203 and in the region of the floor 202 or the majority of the side walls 203 and/or floor 202.

The lower member 220 comprises, on the underside, support members 209. The support members 209 may sit directly on a support surface, e.g. a floor, when installing the bath tub 200. In this embodiment, six support members 209 are provided, one at each corner and two more centrally. It will be understood, however, that the number and arrangement of support members 209 may be altered according to the size and shape of the bath tub.

The support members 209 may comprise sockets 209a for receiving legs or feet (not shown). The legs may be adjustable to change the height of the support members 209 to facilitate installation of the bath tub 200 on uneven floors and/or to allow positioning of the bath tub 200 at a desired height.

The lower member 220 may comprise ribs 221 on the underside. The ribs 221 may strengthen the floor of the bath tub 200 and may also sit on the support surface when the bath tub 200 is installed without the use of feet or legs. The ribs 221 may extend lengthwise and/or transverse to the length of the bath tub 200.

The floor 202 of the bath tub 200 may slope towards the plug hole 208 to facilitate drainage of water from the bath tub 200. The ribs 221 may also provide recessed regions in the lower member 220 which may facilitate distribution of the filler material that forms the core during manufacture.

The height of the ribs 221 may vary to match the slope of the floor 202 of the bath 200. In this way the ribs 221 may sit on the support surface when the bath is installed without legs or feet.

In the embodiments being described, the upper and lower members are formed by vacuum moulding. Acrylic capped ABS sheet may be used for each member. The acrylic layer forms the internal and external surfaces of the bath tub. The ABS layer is in contact with the inner core. The acrylic capped ABS sheet may have a thickness of around 2mm to 5mm, more preferably 3mm to 4mm. In the embodiments being described, the acrylic layer has a thickness of around 15% of the total thickness of the sheet material. Forming the outer surface of acrylic provides a hard-wearing surface that is resistant to scratching. The softer ABS layer below the acrylic layer absorbs impacts which may occur during use. It will be understood that other materials may be employed for the upper and/or lower members.

The inner core is made of a filler and provides strength and rigidity to the bath tub. In the embodiments being described, the filler is a composite material formed from a polymer resin, a catalyser and one or more particulates. Suitable materials include, but are not limited to polymer resins, such as polyester resins, and solid particulates, such stone, limestone, calcium carbonate and the like. The ratio of particulates to polymer resin may be in the region of 4:1 by weight although this is not limiting and other ratios may be employed. The core may have a thickness of 4mm to 15mm, preferably 4mm to 10mm, more preferably 6mm to 8mm, and preferably approximately 7mm. It will also be understood that other filler compositions may be employed.

The volume of the desired inner core can be calculated for a given bath tub design. An expansion and/or contraction ratio for any given filler material under given curing conditions can be calculated, allowing the volume of uncured filler material needed to be calculated. A pre-determined volume of the resin filler can therefore be used to provide sufficient filler to form the inner core without significant wastage.

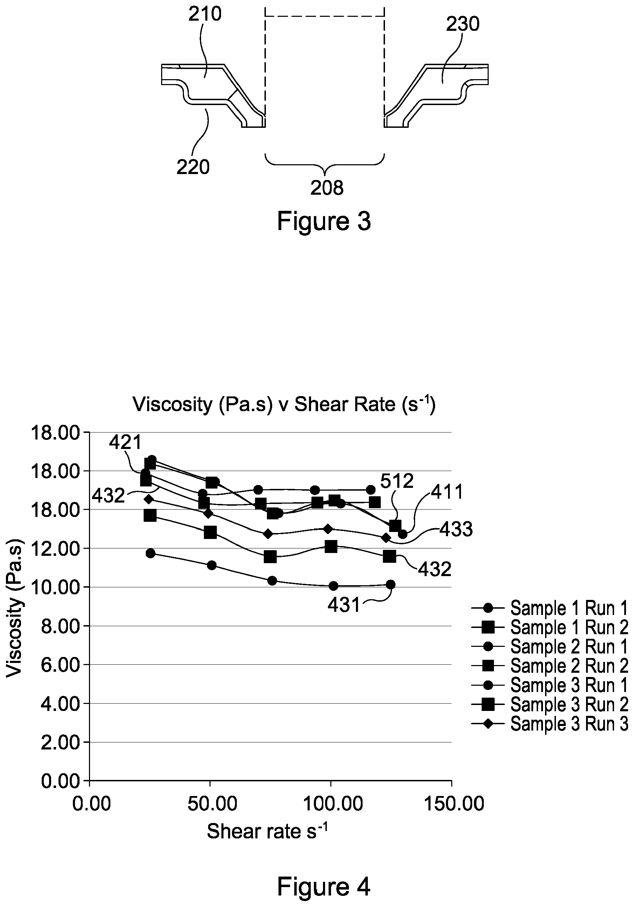

As mentioned above, viscosity of the resin should be considered when selecting a suitable filler material. Three samples were tested as detailed below. The presence of relatively large, dense, settling particles within the resin presents challenges for standard rheology testing methods. A mixer viscometry approach was therefore adopted. A custom vane shear tester was used, wherein a four-bladed vane spindle, of 20mm diameter and 40mm length, was immersed in each sample and rotated. The samples were measured in 72mm diameter containers which were clamped onto the base of the instrument. Prior to measurement, the sediment was redistributed by vigorous manual stirring of the samples with a steel rod for 2 minutes. A range of rotational speeds were applied (100 rpm to 500rpm in 100rpm increments, downswept) and torque was measured following 30s of shearing at each speed. From the torque versus RPM data the shear rate, shear stress and viscosity measurements were calculated. Testing was performed in duplicate, and triplicate for Sample 3 which was less repeatable. The samples were manually stirred for 2 minutes between each repeat. The data were recorded at 22°C. The data are shown below in Tables 1 to 3 and plotted in Figure 4. The non-ideal arrangement of vane in cup measuring geometry necessitated by the sample type means the viscosity values obtained can only be taken as a guideline.

**Table 1 - Rheological Data for Sample 1**

| Run 1 | | | Run 2 | | |
|---|---|---|---|---|---|
| Shear Rate | Shear Stress | Viscosity | Shear Rate | Shear Stress | Viscosity |
| (s⁻¹) | (Pa) | (Pa.s) | (s⁻¹) | (Pa) | (Pa.s) |
| 129.62 | 1639.30 | 12.65 | 126.51 | 1655.21 | 13.08 |
| 103.70 | 1476.16 | 14.24 | 101.21 | 1456.27 | 14.39 |
| 77.77 | 1070.32 | 13.76 | 75.91 | 1046.44 | 13.79 |
| 51.85 | 795.77 | 15.35 | 50.60 | 775.88 | 15.33 |
| 25.92 | 427.73 | 16.50 | 25.30 | 411.81 | 16.28 |

**Table 2 - Rheological Data for Sample 2**

| Run 1 | | | Run 2 | | |
|---|---|---|---|---|---|
| Shear Rate | Shear Stress | Viscosity | Shear Rate | Shear Stress | Viscosity |
| (s⁻¹) | (Pa) | (Pa.s) | (s⁻¹) | (Pa) | (Pa.s) |
| 116.35 | 1740.76 | 14.96 | 117.94 | 1691.02 | 14.34 |
| 93.08 | 1392.61 | 14.96 | 94.35 | 1352.82 | 14.34 |
| 69.81 | 1044.45 | 14.96 | 70.77 | 1008.64 | 14.25 |
| 46.54 | 688.35 | 14.79 | 47.18 | 676.41 | 14.34 |
| 23.27 | 368.05 | 15.82 | 23.59 | 366.06 | 15.52 |

**Table 3 - Rheological Data for Sample 3**

| Run 1 | | | Run 2 | | | Run 3 | | |
|---|---|---|---|---|---|---|---|---|
| Shear Rate | Shear Stress | Viscosity | Shear Rate | Shear Stress | Viscosity | Shear Rate | Shear Stress | Viscosity |
| (s⁻¹) | (Pa) | (Pa.s) | (s⁻¹) | (Pa) | (Pa.s) | (s⁻¹) | (Pa) | (Pa.s) |
| 124.7 | 1253.35 | 10.05 | 124.37 | 1432.39 | 11.52 | 122.74 | 1533.86 | 12.497 |
| 100.6 | 1002.68 | 9.97 | 99.49 | 1197.64 | 12.04 | 98.19 | 1273.24 | 12.967 |
| 75.4 | 775.88 | 10.29 | 74.62 | 859.44 | 11.52 | 73.64 | 937.02 | 12.724 |
| 50.3 | 557.04 | 11.08 | 49.75 | 636.62 | 12.80 | 49.10 | 676.41 | 13.777 |
| 25.1 | 294.44 | 11.71 | 24.87 | 340.19 | 13.68 | 24.55 | 356.11 | 14.507 |

Figure 4 plots viscosity against shear rate for each test run for each sample. All the samples exhibit a certain degree of non-Newtonian behaviour, shear-thinning with increasing shear.

As can be seen from Figure 4, Sample 2 (lines 421, 422) displays a lesser degree of shear thinning behaviour compared to Samples 1 (lines 411, 412) and 3 (lines 431, 432 and 433).

Sample 3 displays a lower viscosity than the other two samples. The greater variation between runs for Sample 3 may be attributable to a more rapid sedimentation due to the lower viscosity. Consistency between inner cores 230 of bath tubs made to the same design is desirable, therefore a resin filler with a viscosity closer to that of Samples 1 and 2 may be preferred. Sample 1 shows higher shear thinning, so may be preferred as lower pressure is needed to make the resin filler flow to take the shape of the inner core. This may assist in avoiding or substantially avoiding formation of air pockets in the core which could have an adverse effect on the strength and/or integrity of the core. The core is preferably solid or substantially solid without voiding.

In the embodiments being described, the inner core has a substantially uniform thickness in the region of the side walls, lip and at least the majority of the floor. The thickness of the inner core is preferably 6mm to 8mm and more preferably approximately 7mm in the embodiments being described. The thickness of the inner core is defined by the spacing of the upper member and lower member. The upper and lower members preferably also have a substantially uniform thickness in the region of the floor, side walls and lip. The thickness of each member is preferably 2mm to 5mm and more preferably approximately 3mm to 4mm. The combined overall thickness of the upper and lower members and the inner core is preferably 13mm to 15mm in the embodiments being described. The combined overall thickness of the upper and lower members and core is preferably substantially uniform in the region of the side walls, lip and at least a major portion of the floor. The ratio of the combined thickness of the upper and lower members to the thickness of the inner core is preferably approximately 1:1 in the embodiments being described.

In at least some embodiments, including the embodiments being described, the inner core may have some localised regions of different thicknesses, for example in the vicinity of the support members and/or support ribs. The thickness of the inner core may also vary in the vicinity of the drain hole as shown in Figure 3.

The ribs on the lower member can provide localised sections of the bath tub in which the inner core is of a variable thickness. These sections provide extra rigidity and strength for the bath tub. In particular, the bath tub does not flex when filled with water, stood on or sat on by a person. The ribbed design reduces the amount of resin filler required, as compared to using a thicker base, thereby reducing the weight of the bath tub and resulting in a cost saving in material. Extra strength and rigidity may also be provided around the drain hole.

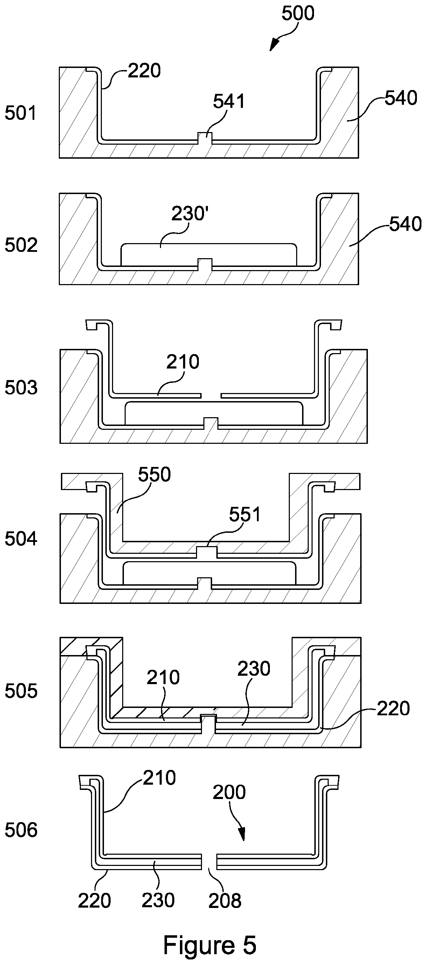

Manufacture of a bath tub 200 (manufacture of the bath tub 100 is similar) will now be described with additional reference to Figure 5. Figure 5 shows the different stages of manufacture of the bath tub.

Firstly, the upper member 210 and the lower member 220 are pre-formed into the required shape by vacuum moulding.

Method 500 is then performed. At step 501, the lower member 220 is supported in a lower former or nest 540.

At step 502, a filler material 230' is poured into the lower member 220.

The upper member 210 is then fitted (Step 503) into the lower member 220 to sandwich the filler material 230' between the two members.

At Step 504, the upper former 550 is placed within the upper member 210. In alternative embodiments, the upper former 550 may be placed within the upper member 210 before the upper member is fitted into the lower member.

In the embodiment shown in Figure 5, the lower former 540 has a projecting portion 541 which projects through the drain hole 208. Projecting portion 541 cooperates with a depression 551 in the upper former 550, such that no filler material 230' can remain in the region of the drain hole 208.

In alternative or additional embodiments, the regions of the members 210, 220 which are to form the drain hole 208 comprise cup-shaped regions. The cup shaped regions are a close fit with each other to aid location of the upper member 210 relative to the lower member 220 when the upper member is fitted into the lower member. The depth and fit of the cups are such that it is impossible for any filler material 230' to remain in the space between the cups when the members 210, 220 are brought together.

Correct fitting of the members 210, 220 together is further aided by the close fit of peripheral edges of the members, around the lip 204 of the bath tub. The close fit of the peripheral edges prevents filler material 230' escaping from these regions.

As shown in Figure 5, at Steps 504 and 505, a top former or brace 550 is lowered onto the upper member 210 and pressure is applied to force the filler material 230' to flow to all accessible regions of the cavity between the members 210, 220.

Flanges (not shown) around the peripheral edges of the members 210, 220 are clamped between the formers 540, 550. The shape of the lower former 540 and of the upper former 550 is complementary to the shape of lower member 220 and the upper member 210 respectively. In this way, the members 210, 220 are supported to maintain the required shape and alignment of the members 210, 220.

A hinged carrier (not shown) is provided for the upper and lower formers 540, 550. The carrier comprises upper and lower portions with opposed cavities for receiving the upper former and lower former. The carrier comprises several 40mm diameter pneumatic cylinders for generating around 80kg of down force on the upper member 210 via the upper former 550, to displace the filler material 230' throughout the cavity formed between the members 210, 220. Housing the formers 540, 550 in the carrier eliminates heavy manual lifting of the formers.

Pressure is applied to the upper and lower members for approximately 10 minutes after the filler material is poured in. Then the applied pressure is reduced allowing, the upper former 550 to back off 5mm. This ensures that contraction of the bath tub during curing the filler material 230' does not damage the formers 540, 550. In this position, the formers 540, 550 still limit and control any distortion of the bath tub. It will be understood that the back off distance of 5mm can be altered to achieve the best results.

The upper former 550 may then be lowered again to apply pressure to the bath tub for a final cure of the filler material 230' to form the inner core 230 of composite filler. After the final cure, the brace 550 is raised and the bath tub is removed from the lower former (Step 506).

In some embodiments, the upper and lower members 210 and 220 may be coated in a primer resin to assist in obtaining good adhesion between the members 210, 220 and the filler 230' of the inner core. The primer resin may be applied after the upper and lower members are pre-formed to the required shape. The primer resin may be applied by any suitable means and may be heated to cure the primer resin.

In embodiments wherein cup regions are used in the vicinity of the drain hole 208, the cup regions are then cut-off with a band saw or by other means to provide a flat surface around the perimeter on the underside of the bath tub for mounting the bath tub and the drain hole 208 for connection to a waste pipe. Similar cup regions may be used for the overflow hole 209.

The process 500 is a closed mould process and therefore any emissions are trapped within the bath tub. Accordingly, there is no requirement for means to extract the emissions during manufacture, resulting in a reduction in costs as compared to prior art methods.

After manufacture of the bath tub 200 lifetime testing was performed to assess the durability of the bath tub as compared to prior art models. Two tests, Test A and Test B, were performed. At the completion of testing, there should be no evidence of movement and/or distortion of the bath tub, nor other defects which may impair the appearance and/or the functioning of the bath tub.

Table 4 indicates how lifetime use equivalents were calculated:

**Table 4**

| **Calculations** | |
|---|---|
| 3 | baths or showers per day |
| 1092 | cycles per year |
| *Therefore*... | |
| 5 years | 5460 cycles |
| 15 years | 16380 cycles |
| 25 years | 27300 cycles |

### Test A

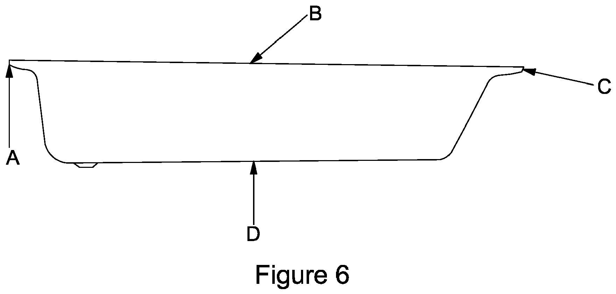

1. Install 4 bath tubs as per the installation instructions;
2. Apply Dial Test Indicator (DTI) gauges at points A, B, C and D shown in Figure 6 - measurements are to be taken at the start and end of each 30 minute cycle (see Step 4);
3. Fill the each bath to the overflow level with water at 44 °C;
4. Using a load actuator, cycle a load of 25 stone across a diameter of approximately 300mm for 30 minutes at 60rpm whilst the bath contains water, the load is to be applied centrally on a flat section on the base of the bath(for single ended) and at either end on the base for double ended;
5. For double ended baths a load of 50 stone is applied which is diverted to two points on the base of the bath;
6. After 30 minutes, stop the cycle load, and drain the water from the bath measure the empty bath deflection;
7. Fill the bath to the overflow with cold mains water and drain to cool the bath;
8. Measure deflection;
9. Repeat steps 2 - 8 until the test is completed

Two of the tested bath tubs were tested until an equivalent of 15 years of use, and the remaining two bath tubs were tested until an equivalent of 25 years of use.

An inspection was performed at every 5 years of use equivalent. Any damage to the bath surface, leg sockets and/or legs was identified and any distortion/deflection of the bath surface, and any retention of water were noted.

A strain resistance test (Test B) was then performed on one of the "15 year old" bath tubs and one of the "25 year old" bath tubs.

Test B 1. Using a stress test rig with a cylinder of diameter 150mm, apply pressure to the base of the bath tub. Apply 15 psi for 4 hours, and then move to 20 psi for 4 hours, etc.; 2. After each new load application, measure the deflection of the bath at the highlighted points below; 3. Visually examine the top surface and the underside of the bath, document any significantly damaged areas.

The bath tub 100, 200 withstood the test regime well, and was comparable to cast iron products in terms of resilience. The results showed a regular pattern of deflection which was much reduced from deflection seen for prior art acrylic products.

It was expected that DTI gauge would show the worst deflection at position D, however the tested bath tubs showed an improvement in structural integrity as compared to the acrylic product of roughly 83% in this position, and an average 88.45% strength increase based on Test B results.

As will now be appreciated, the present invention provides a bath tub in which the resin filler of the inner core 230 is concealed from view by the upper and lower members 110, 120 providing a clean, smooth appearance that may appeal to the consumer. Furthermore, a smooth, flat finish can be achieved when moulding the ABS material that makes it easy to form a seal between waste pipes and the bath tub, if the bath tub is dropped or knocked heavily against another object the ABS of members 110, 120 will absorb some of the impact and can reduce damage caused to the bath tub.

It will be understood that the invention is not limited to the embodiments described above and modifications and alterations within the scope of the appended claims will be apparent to those skilled in the art.

For example, the upper member, lower member and inner core may be made of any suitable materials for the intended use of the composite article.

## Claims

1. A composite article (100, 200) comprising a bath tub (100, 200) and having an upper member (210) of plastics material and a lower member (220) of plastics material that together form an outer shell, and an inner core (230) of a cured filler within the shell, wherein the bath tub (100, 200) has a floor (102, 202) and side walls (103, 203) and the inner core (230) has a substantially uniform thickness between the upper and lower members (210, 220), and wherein, prior to curing, the filler exhibits shear thinning and has a viscosity in the range of 12 to 17 Pa.s.

2. The composite article (100, 200) of claim 1 wherein the thickness of the inner core (230) is between 4mm and 15mm, optionally between 4 and 10mm, and further optionally the thickness of the inner core (230) is approximately 7mm.

3. The composite article (100, 200) of claim 1 or claim 2 wherein the combined thickness of the upper and lower members (210, 220) is between 4 and 10mm, and optionally between 6 and 8mm.

4. The composite article (100, 200) of any preceding claim wherein a ratio of the combined thickness of the upper and lower members (210, 220) to the thickness of the inner core (230) is approximately 1:1.

5. The composite article (100, 200) of any preceding claim wherein the combined thickness of the upper and lower members (210, 220) and the inner core (230) is substantially uniform in the region of the side walls (103, 203) of the bath tub (100, 200) and the in the region of the floor (102, 202) or a major portion of the floor of the bath tub (100, 200).

6. The composite article (100, 200) of any preceding claim wherein, prior to curing, the filler (230) has a viscosity of substantially between 12 and 17 Pa. S at a temperature of 22°C and at a shear rate of either substantially 25 S⁻¹ or substantially 120S⁻¹, as measured using a vane shear tester comprising a four-bladed vane spindle of 20mm diameter and 40mm length.

7. The composite article (100, 200) of any preceding claim wherein the filler (230) comprises at least one of:
(i) a composite filler material; and
(ii) a resin filler material.

8. The composite article (100, 200) of any preceding claim wherein the bath tub (100, 200) comprises one or more of a drain hole (208), leg sockets (209) and strengthening ribs (221), and wherein the thickness of the inner core (230) varies only in the region of the drain hole (208), leg sockets (209) and/or strengthening ribs (221).

9. A method (500) of manufacturing a composite article (100, 200) comprising a bath tub (200) having an upper member (210) of plastics material and a lower member (220) of plastics material that together form an outer shell, and an inner core (230) of filler within the shell, wherein the inner core (230) has a substantially uniform thickness, the method (500) comprising the steps of:
(i) forming the upper and lower members from sheet plastics material;
(ii) placing (501) the lower member into a first support (540);
(iii) pouring (502) a predetermined volume of filler material (230')into the lower member (220), wherein the filler material (230') exhibits shear thinning and has a viscosity in the range of 12 to 17 Pa.s;
(iv) positioning (503, 504) the upper member (210) to sandwich the filler material (230') between the members, with a second support (550) within the upper member (210);
(v) applying pressure (505) to compress and displace the filler material (230') throughout a cavity formed between the members (210, 220) prior to curing, such that a layer of the filler material (230') of substantially uniform thickness is created between the members (210, 220); and
(vi) curing the article (200).

10. A method (500) according to claim 9 wherein the second support (550) has a shape complementary to the shape of the upper member (210) and the first support (540) has a shape complementary to the lower member (220).

11. A method (500) according to claim 9 or claim 10 wherein the filler material (230') is a composite filler material.

12. A method (500) according to any of claims 9 to 11 wherein the applied pressure is reduced during curing.

13. A method (500) according to any of claims 9 to 12 wherein the combined thickness of the upper and lower members (210, 220) is from 4mm to 10mm and the thickness of the inner core is from 4mm to 10mm, and wherein optionally the combined thickness of the upper and lower members (210, 220) is from 6mm to 8mm and the thickness of the inner core (230) is around 7mm.

14. A method (500) according to any of claims 9 to 13 wherein a ratio of the combined thickness of the upper and lower members (210, 220) to the thickness of the inner core (230) is approximately 1:1.

15. A method (500) according to any of claims 9 to 14 wherein the thickness of the inner core (230) is substantially 7mm.

## Patentansprüche

1. Verbundgegenstand (100, 200), der eine Badewanne (100, 200) umfasst und ein Oberteil (210) aus Kunststoffmaterial und ein Unterteil (220) aus Kunststoffmaterial aufweist, die zusammen eine äußere Hülle bilden, und einen Innenkern (230) aus einem ausgehärteten Füllstoff innerhalb der Hülle umfasst, wobei die Badewanne (100, 200) einen Boden (102, 202) und Seitenwände (103, 203) aufweist und der Innenkern (230) eine im wesentlichen gleichmäßige Dicke zwischen dem oberen und dem Unterteil (210, 220) aufweist, und wobei der Füllstoff vor dem Aushärten eine Strukturviskosität zeigt und eine Viskosität im Bereich von 12 bis 17 Pa·s aufweist.

2. Verbundgegenstand (100, 200) nach Anspruch 1, wobei die Dicke des Innenkerns (230) zwischen 4 mm und 15 mm beträgt, optional zwischen 4 und 10 mm beträgt, und die Dicke des Innenkerns (230) weiterhin optional etwa 7 mm beträgt.

3. Verbundgegenstand (100, 200) nach Anspruch 1 oder 2, wobei die kombinierte Dicke der Ober- und Unterteile (210, 220) zwischen 4 und 10 mm und optional zwischen 6 und 8 mm beträgt.

4. Verbundgegenstand (100, 200) nach einem der vorstehenden Ansprüche, wobei das Verhältnis der kombinierten Dicke der Ober- und Unterteile (210, 220) zur Dicke des Innenkerns (230) etwa 1:1 beträgt.

5. Verbundgegenstand (100, 200) nach einem der vorstehenden Ansprüche, wobei die kombinierte Dicke der Ober- und Unterteile (210, 220) und des Innenkerns (230) im Bereich der Seitenwände (103, 203) der Badewanne (100, 200) und im Bereich des Bodens (102, 202) oder eines Großteils des Bodens der Badewanne (100, 200) im Wesentlichen gleichförmig ist.

6. Verbundgegenstand (100, 200) nach einem der vorstehenden Ansprüche, wobei der Füllstoff (230) vor dem Aushärten eine Viskosität von im Wesentlichen zwischen 12 und 17 Pa·s bei einer Temperatur von 22 °C und bei einer Scherrate von entweder im Wesentlichen 25 S⁻¹ oder im Wesentlichen 120 S⁻¹ aufweist, gemessen mit einem Flügel-Schergerät, der einen vierblättrigen Flügelrührer mit 20 mm Durchmesser und 40 mm Länge umfasst.

7. Verbundgegenstand (100, 200) nach einem der vorstehenden Ansprüche, wobei der Füllstoff (230) mindestens eines der Folgenden umfasst:
(i) ein Verbundfüllmaterial; und
(ii) ein Harz-Füllmaterial.

8. Verbundgegenstand (100, 200) nach einem der vorstehenden Ansprüche, wobei die Badewanne (100, 200) ein oder mehrere von einem Ablaufloch (208), Beinstutzen (209) und Verstärkungsrippen (221) umfasst, und wobei die Dicke des Innenkerns (230) nur im Bereich des Ablauflochs (208), der Beinstutzen (209) und/oder der Verstärkungsrippen (221) variiert.

9. Verfahren (500) zur Herstellung eines Verbundgegenstandes (200), der eine Badewanne (100, 200) umfasst und ein Oberteil (210) aus Kunststoffmaterial und ein Unterteil (220) aus Kunststoffmaterial aufweist, die zusammen eine äußere Hülle bilden, und einen Innenkern (230) aus einem ausgehärteten Füllstoff innerhalb der Hülle umfasst, wobei der Innenkern (230) eine im Wesentlichen gleichmäßige Dicke aufweist, und das Verfahren (500) die folgenden Schritte umfasst:
(i) Formen der Ober- und Unterteile aus blattförmigen Kunststoffmaterial;
(ii) Einlegen (501) des Unterteils in einen ersten Träger (540);
(iii) Gießen (502) eines vorbestimmten Volumens von Füllmaterial (230') in das Unterteil (220), wobei das Füllmaterial (230') eine Strukturviskosität zeigt und eine Viskosität im Bereich von 12 bis 17 Pa·s aufweist;
(iv) Positionieren (503, 504) des Oberteils (210), um das Füllmaterial (230') zwischen den Teilen mit einem zweiten Träger (550) innerhalb des Oberteils (210) einzuschließen;
(v) Aufbringen von Druck (505), um das Füllmaterial (230') in einem zwischen den Teilen (210, 220) vor dem Aushärten gebildeten Hohlraum zu komprimieren und zu verdrängen, sodass eine Schicht des Füllmaterials (230') von im Wesentlichen gleichmäßiger Dicke zwischen den Teilen (210, 220) erzeugt wird; und
(vi) Aushärten des Gegenstandes (200).

10. Verfahren (500) nach Anspruch 9, wobei der zweite Träger (550) eine zu der Form des Oberteils (210) komplementäre Form aufweist und der erste Träger (540) eine zu dem Unterteil (220) komplementäre Form aufweist.

11. Verfahren (500) nach Anspruch 9 oder Anspruch 10, wobei das Füllmaterial (230') ein Verbundfüllmaterial ist.

12. Verfahren (500) nach einem der Ansprüche 9 bis 11, wobei der angewandte Druck während des Aushärtens reduziert wird.

13. Verfahren (500) nach einem der Ansprüche 9 bis 12, wobei die kombinierte Dicke des oberen und Unterteils (210, 220) 4 mm bis 10 mm und die Dicke des Innenkerns 4 mm bis 10 mm beträgt, und wobei die kombinierte Dicke des Ober- und Unterteils (210, 220) optional 6 mm bis 8 mm und die Dicke des Innenkerns (230) etwa 7 mm beträgt.

14. Verfahren (500) nach einem der Ansprüche 9 bis 13, wobei das Verhältnis der kombinierten Dicke der Ober- und Unterteile (210, 220) zur Dicke des Innenkerns (230) etwa 1:1 beträgt.

15. Verfahren (500) nach einem der Ansprüche 9 bis 14, wobei die Dicke des Innenkerns (230) im Wesentlichen 7 mm beträgt.

## Revendications

1. Article composite (100, 200) comprenant une baignoire (100, 200) et présentant un élément supérieur (210) en matière plastique et un élément inférieur (220) en matière plastique qui forment ensemble une coque extérieure, et une partie centrale intérieure (230) en charge durcie à l'intérieur de la coque, dans lequel la baignoire (100, 200) a un fond (102, 202) et des parois latérales (103, 203) et la partie centrale intérieure (230) présente une épaisseur sensiblement uniforme entre les éléments supérieur et inférieur (210, 220), et dans lequel, avant un durcissement, la charge montre une fluidification par cisaillement et présente une viscosité dans la plage de 12 à 17 Pa·s.

2. Article composite (100, 200) de la revendication 1 dans lequel l'épaisseur de la partie centrale intérieure (230) est entre 4 mm et 15 mm, éventuellement entre 4 et 10 mm, et en outre éventuellement l'épaisseur de la partie centrale intérieure (230) est d'environ 7 mm.

3. Article composite (100, 200) de la revendication 1 ou la revendication 2 dans lequel l'épaisseur combinée des éléments supérieur et inférieur (210, 220) est entre 4 et 10 mm, et éventuellement entre 6 et 8 mm.

4. Article composite (100, 200) d'une quelconque revendication précédente dans lequel un rapport de l'épaisseur combinée des éléments supérieur et inférieur (210, 220) à l'épaisseur de la partie centrale intérieure (230) est d'environ 1:1.

5. Article composite (100, 200) d'une quelconque revendication précédente dans lequel l'épaisseur combinée des éléments supérieur et inférieur (210, 220) et de la partie centrale intérieure (230) est sensiblement uniforme dans la région des parois latérales (103, 203) de la baignoire (100, 200) et dans la région du fond (102, 202) ou une majeure partie du fond de la baignoire (100, 200).

6. Article composite (100, 200) d'une quelconque revendication précédente dans lequel, avant un durcissement, la charge (230) présente une viscosité comprise sensiblement entre 12 et 17 Pa·s à une température de 22 °C et à un taux de cisaillement soit de sensiblement 25 S⁻¹, soit de sensiblement 120 S⁻¹, tel que mesuré à l'aide d'un dispositif de test scissométrique comprenant un axe d'ailette à quatre pales de 20 mm de diamètre et 40 mm de longueur.

7. Article composite (100, 200) d'une quelconque revendication précédente dans lequel la charge (230) comprend au moins une de :
(i) une matière de charge composite ; et
(ii) une matière de charge de résine.

8. Article composite (100, 200) d'une quelconque revendication précédente dans lequel la baignoire (100, 200) comprend un ou plusieurs d'un trou d'évacuation (208), de manchons de pieds (209) et de nervures de renfort (221), et dans lequel l'épaisseur de la partie centrale intérieure (230) varie uniquement dans la région du trou d'évacuation (208), des manchons de pieds (209) et/ou des nervures de renfort (221).

9. Procédé (500) de fabrication d'un article composite (100, 200) comprenant une baignoire (200) présentant un élément supérieur (210) en matière plastique et un élément inférieur (220) en matière plastique qui forment ensemble une coque extérieure, et une partie centrale intérieure (230) en charge à l'intérieur de la coque, dans lequel la partie centrale intérieure (230) présente une épaisseur sensiblement uniforme, le procédé (500) comprenant les étapes consistant à :
(i) former les éléments supérieur et inférieur à partir d'une matière plastique en feuille ;
(ii) placer (501) l'élément inférieur dans un premier support (540) ;
(iii) verser (502) un volume prédéterminé d'une matière de charge (230') dans l'élément inférieur (220), dans lequel la matière de charge (230') montre une fluidification par cisaillement et présente une viscosité dans la plage de 12 à 17 Pa·s ;
(iv) positionner (503, 504) l'élément supérieur (210) pour coincer la matière de charge (230') entre les éléments, avec un second support (550) à l'intérieur de l'élément supérieur (210) ;
(v) appliquer une pression (505) pour comprimer et déplacer la matière de charge (230') dans toute une cavité formée entre les éléments (210, 220) avant un durcissement, de telle sorte qu'une couche de la matière de charge (230') d'une épaisseur sensiblement uniforme soit créée entre les éléments (210, 220) ; et
(vi) faire durcir l'article (200).

10. Procédé (500) selon la revendication 9 dans lequel le second support (550) présente une forme complémentaire de la forme de l'élément supérieur (210) et le premier support (540) présente une forme complémentaire de l'élément inférieur (220).

11. Procédé (500) selon la revendication 9 ou la revendication 10 dans lequel la matière de charge (230') est une matière de charge composite.

12. Procédé (500) selon l'une quelconque des revendications 9 à 11 dans lequel la pression appliquée est réduite pendant un durcissement.

13. Procédé (500) selon l'une quelconque des revendications 9 à 12 dans lequel l'épaisseur combinée des éléments supérieur et inférieur (210, 220) est de 4 mm à 10 mm et l'épaisseur de la partie centrale intérieure est de 4 mm à 10 mm, et dans lequel éventuellement l'épaisseur combinée des éléments supérieur et inférieur (210, 220) est de 6 mm à 8 mm et l'épaisseur de la partie centrale intérieure (230) est d'à peu près 7 mm.

14. Procédé (500) selon l'une quelconque des revendications 9 à 13 dans lequel un rapport de l'épaisseur combinée des éléments supérieur et inférieur (210, 220) à l'épaisseur de la partie centrale intérieure (230) est d'environ 1:1.

15. Procédé (500) selon l'une quelconque des revendications 9 à 14 dans lequel l'épaisseur de la partie centrale intérieure (230) est sensiblement de 7 mm.
